# EUROPEAN PATENT APPLICATION

(11) **EP 1 713 254 A2**
(43) Date of publication of application: **18.10.2006**
(21) Application number: 06111385.8
(22) Date of filing: 20.03.2006
(51) Int. Cl.: H04N 5/222

(54) **Camera system with PIP in viewfinder**

(30) Priority: 14.04.2005 EP 05300279
(71) Applicant: Thomson Licensing, 92100 Boulogne-Billancourt (FR)
(72) Inventor: van Geel, Martinus Wilhelmus Cornelis, 4735 SV Zegge (NL); van der Kuijl, Evert, 4724 SJ Wouw (NL); Koutstaal, Marcel, 5237 PC S'Hertogenbosch (NL)
(74) Representative: Rossmanith, Manfred

(57) **Abstract**

A system is suggested that allows for transmitting a signal from at least one first camera to a second camera, upon activation by the camera operator of the respective first camera. The signal is displayed in the viewfinder (10) of the second camera. The signal may include an indication that the operator of the at least one first camera has a 'good-shot', i.e. is currently capturing images that are ready for broadcasting and/or recording. In one embodiment the signal includes an identification (11) of the camera that transmits the signal. In another embodiment the signal includes the video signal (12, 13, 14) captured from the transmitting camera. In yet another embodiment the second camera displays images coming from multiple first cameras. The signal effects that the image of the camera that emits a 'good-shot' signal is displayed in a highlighted fashion.

## Description

The invention relates to a system in which at least two cameras are operated at the same time in one location.

In the production of a video recording or a video broadcast, in which multiple cameras are used, a director or producer in a control room usually directs the camera operators with regard to the places from where they are to capture the images. The images of the individual cameras are transmitted to the control room, in which multiple monitors are placed. Each monitor shows the image coming from a different camera, and the director or producer decides to assign positions to the camera operators in order to optimise the coverage of the event that is recorded or broadcast. An image that is considered suitable for broadcast or for use in a recording that is processed after the images are captured is called a 'good shot'. The whole content that is recorded throughout the coverage of an event is called 'footage'.

In order to become more cost-effective, there is a need to eliminate the need for a director or producer.

When multiple cameras are used without a producer who co-ordinates the placement of the cameras, it is difficult to keep the overall-view of the production. In the worst case, all cameras, e.g., each recording on a built-in tape recorder, have a 'good shot' at the same time. The camera operators then simultaneously or almost simultaneously change positions in order to capture the next shot from a different position. In this case, e.g., if the production is a live music performance, there may be no useable footage during part of the music performance. This however is not discovered until the footage is edited afterwards.

In order to reduce the risk of not covering part of a live event when no producer is involved, camera operators use headsets, which allow them to talk to each other. The known way to cope with the situation explained above has several drawbacks. Firstly, talking camera operators can be very annoying if the event that is covered is, e.g., a musical and they are placed on the stage. Secondly, when more than two camera operators try to tell each other that they have a 'good shot', it gets busy on the communication line, and the general intelligibility of what is spoken may be reduced. Thirdly, the cameramen cannot see the shots that the other cameramen are making, so the shots may be exactly the same, only from a different position.

JP 11 088 728 discloses a camera that is capable of transmitting the lens information to other cameras. In this way it is possible to share the information about zoom or other lens settings with other cameramen that are capturing the scene.

WO 0 064 143 A discloses a camera with an auxiliary camera that is looking backwards. The image of the camera directed backwards is reproduced in the viewfinder as a picture in picture. This allows for the cameraman to see where he is going when he is moving backwards without having to take his eyes from the viewfinder.

However, in the current solutions the camera operators do not exactly know what the other camera operator is currently capturing, and if it is a useable shot or not.

It is, therefore, desirable to provide a system for recording and/or broadcasting audio and/or video signals in which the camera operators may have access to the images and/or the sound currently captured by other camera operators on the film set or film location.

The system as claimed in claim 1 provides such a system. Advantageous developments and embodiments are presented in the dependent claims.

In a first embodiment of the invention the pictures of every camera are transmitted to the respective other cameras in real-time. The transmitted pictures from the respective other cameras are then displayed, e.g. as a picture-in-picture, or PIP, in the viewfinder. This allows for every camera operator to observe the shots of the respective other camera operators, hence allowing for choosing a new position on the film set or film location that is different from the other cameras and that offers a different point-of-view. The camera for use in the inventive system may be adapted to choose the pictures of one or several of the respective other cameras to be displayed in the viewfinder, or to switch off displaying of other camera's images.

In a second embodiment of the invention each camera for use in the inventive system is provided with a 'good-shot' switch. By activating the 'good-shot' switch a camera operator may indicate that he/she thinks that his/her shot is very useable. Activating the 'good-shot' switch issues a 'good-shot' signal to the other cameras. In a development, the activated 'good-shot' signal causes the image of that camera that has an activated 'good-shot' signal to be displayed in the viewfinders of the respective other cameras. The 'good-shot' signal may, in this case, be embedded in the video signal transmitted to the respective other cameras. The cameras may be adapted to only enable displaying of the video signal of another camera when the video signal is accompanied by a 'good-shot' signal.

The 'good-shot' signal may also serve as an indicator to the other camera operators that they may now change positions without the risk of not covering part of the event. Even if only the 'good-shot' signal is transmitted, without any further signal such as video and/or audio, the risk of not covering part of the event is reduced.

In a further development of the invention, either the first or the second embodiment, the cameras may show multiple images of the respective other cameras in their viewfinder. If a 'good-shot' signal is received, the image coming from the camera that has issued the 'good-shot' signal is highlighted in the viewfinder. This allows for the other camera operators to easily identify the image which is believed to be a 'good-shot'. Highlighting the image considered to be a 'good-shot' may be made in the form of a distinctive frame around the image, or by means of a blinking indicator, or other means generally known.

In another development, the video signal transmitted to the respective other cameras has a frame rate that is lower than the original frame rate of the recorded or broadcast video signal. It is also conceivable to transmit the images at a reduced resolution, i.e. with less lines and pixels, in order to reduce the requirements for the transmission bandwidth.

In yet another embodiment of the inventive system and the corresponding camera, the camera operator may select video images from respective other cameras on the set to be displayed, thereby forming a group. In a further development, only video signals from cameras belonging to that group can be displayed in the viewfinder, either permanently or when the respective video signal is accompanied by a 'good-shot' signal. This avoids having too many separate images displayed in the viewfinder, if a larger number of cameras is used to cover the event.

The transmission of the 'good-shot' signal and the corresponding video signal for display in the viewfinder may either be effected via wireless or cable connections, depending on the type of camera and the camera set-up used.

The invention will be described in the following with reference to the drawing. In the drawing,
- Fig.1: shows a schematic view of a film set with three cameras;
- Fig.2: shows a schematic view of a first embodiment of the viewfinder of a camera for use in the inventive system;
- Fig.3: shows a schematic view of a second embodiment of the viewfinder of a camera for use in the inventive system; and
- Fig.4: shows a schematic view of a third embodiment of the viewfinder of a camera for use in the inventive system.

In the figures, same or similar elements are referenced with the same reference symbol.

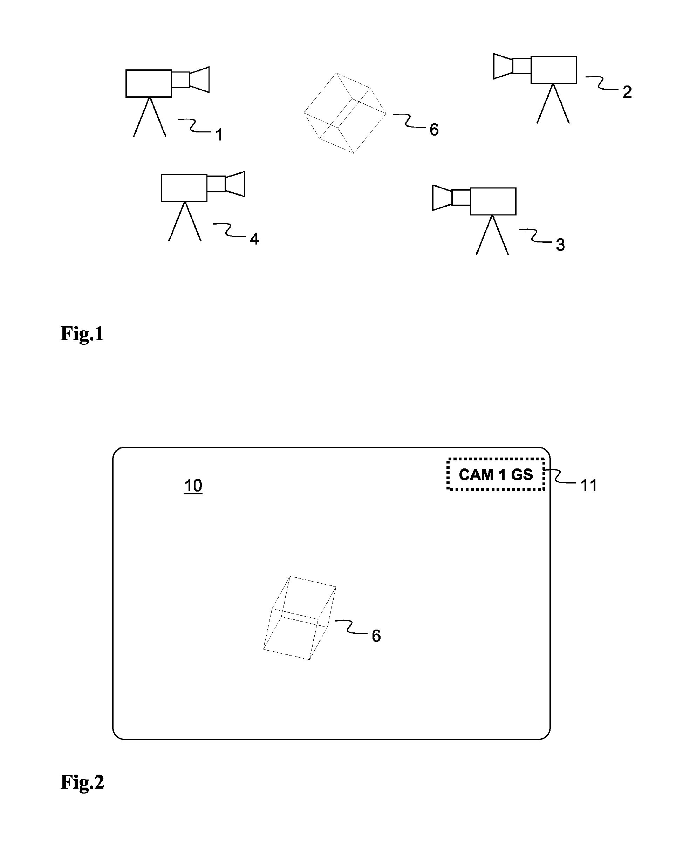

In figure 1 a schematic view of a typical film set is shown. Four cameras 1, 2, 3, 4 are placed around an object 6, which is to be captured. For simplification purposes, the object 6 has a cubic shaped form. The number of cameras may be larger, or there may only be two cameras involved, without leaving the scope of the invention. The cameras 1, 2, 3, 4 are taking pictures of the object 6 from different views.

In figure 2 a viewfinder 10 of a camera for use in the inventive system according to a first exemplary embodiment is shown. In the viewfinder 10, the object 6 is reproduced. In the top right corner, a 'good-shot' indication 11 is visible. The 'good-shot' indication 11 is in this example a field with information about the camera number that has activated a 'good-shot' signal. The 'good-shot' indication 11 may appear in other forms, in particular the colour of the 'good-shot' indication 11 may be contrasting, or the field may be blinking, or the like. There may also be multiple indicators from several cameras that have a 'good-shot' simultaneously. This allows for a camera operator to decide whether he or she may change position or not. E.g., unless at least one 'good-shot' indication from another camera is lit, the camera operator who activated a 'good-shot' indication for his or her camera must not change his or her position.

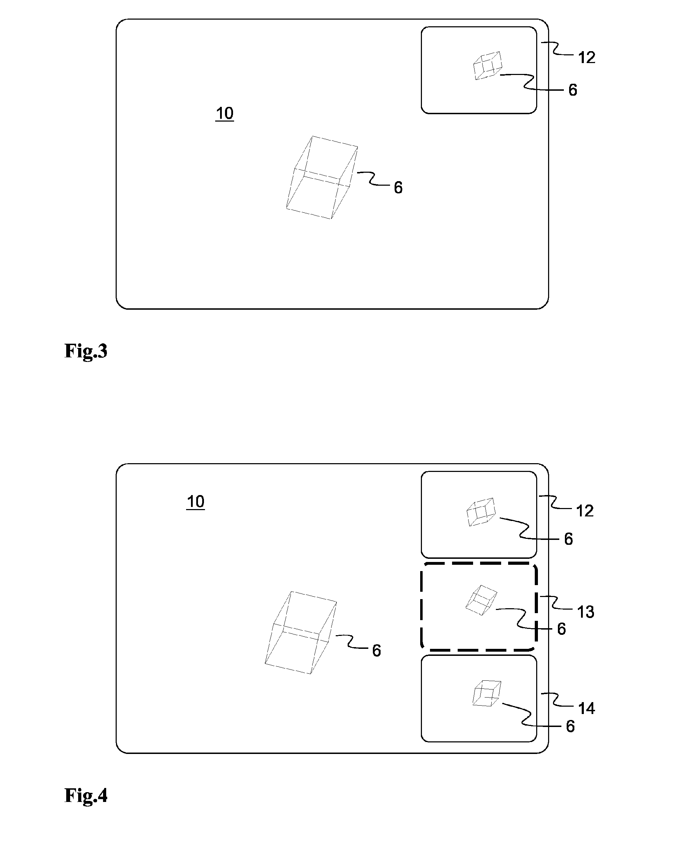

In figure 3 a viewfinder 10 of a camera for use in the inventive system according to a second exemplary embodiment is shown. As was described with reference to figure 2, the object 6 is reproduced in the viewfinder 10. A small image from one of the other cameras is present in the top right corner of the viewfinder 10 as a picture-in-picture, or PIP, 12. In the figure, the object 6 can be seen in the PIP 12 from a different angle. The PIP 12 is only visible when a camera operator of one of the other cameras on the set has activated the 'good-shot' signal, thus indicating to the other camera operators that they may now try to find a new position for their next images. The PIP 12 may also carry further information, e.g., about which camera is taking the image (not shown).

In figure 4 a viewfinder 10 of a camera for use in the inventive system according to a third exemplary embodiment is shown. As was described with reference to figure 2, the object 6 is reproduced in the viewfinder 10. Additionally, three small images, or PIPs, 12, 13, 14 from the other cameras on the set are visible in the viewfinder 10, each showing the object 6 from a different angle. In the figure, PIP 13 is highlighted, indicated by the bold dashed frame around it. Highlighting may take place by other, commonly known means, such as a coloured or blinking frame. The highlighting indicates that a camera operator has activated the 'good-shot' signal, thus allowing the other camera operators to find new positions for their next shots.

The invention opens a way of working together for multiple camera operators without having a producer around to decide on what to shoot.

## Claims

1. System for recording or broadcasting video signals, wherein the system includes at least two video cameras (1, 2, 3, 4) that can be moved independently from each other, wherein each of the at least two video cameras (1, 2, 3, 4) has a viewfinder, **characterised in that** each of the at least two cameras is provided with means for selectively transmitting a signal to a respective other camera of the system, wherein the respective other camera is adapted to receive and indicate the signal in its viewfinder (10).

2. System according to claim 1 **characterised in that** a video camera of the at least two video cameras (1, 2, 3, 4) is adapted to receive and indicate signals from multiple other cameras of the system.

3. System according to claim 1 or 2 **characterised in that** the signal is transmitted by a first camera of the at least two video cameras (1, 2, 3, 4) of the system only upon activation of the signal by the camera operator of the respective first camera.

4. System according to claim 1, 2 or 3 **characterised in that** the transmitted signal includes an identification of the respective camera (11) that is transmitting the signal.

5. System according to one of the preceding claims **characterised in that** the transmitted signal includes the video signal captured by the respective transmitting camera.

6. System according to claim 5 **characterised in that** the video signal that is transmitted for display in the viewfinder of another camera in the system has a reduced frame rate and/or resolution compared to the video signal that is recorded or broadcast by the respective camera.

7. System according to claim 5 or 6 wherein the transmitted signal includes a further component, the transmission of which can additionally be activated by the camera operator of the respective transmitting camera, and which causes the respective other camera in the system to highlight the corresponding video signal in the viewfinder of the respective other camera in the system.

8. Camera for use in the system according to one of the preceding claims having means for transmitting a signal **characterised in that** the camera has means for selectively receiving signals from at least one other camera, and that the camera is adapted to selectively display in its viewfinder (10) signals coming from the at least one other camera.

9. Camera according to claim 8 **characterised in that** the camera is adapted to reproduce in its viewfinder (10) a video signal received from the at least one other camera (12, 13, 14) in a reduced size when compared to the original size.

10. Camera according to claim 9 **characterised in that**, the camera has means for detecting a component according to claim 7 in the received signal and that the camera is adapted to produce a highlighting in the viewfinder in the form of a blinking and/or coloured frame around the image upon detection of that component.

11. Camera according to claim 9 or 10 **characterised in that** the camera has means for selectively activating display of the image received from the at least one other camera.
